# EUROPÄISCHE PATENTSCHRIFT

(11) **EP 2 481 456 B1**
(45) Veröffentlichungstag und Bekanntmachung des Hinweises auf die Patenterteilung: **24.04.2013**
(21) Anmeldenummer: 12000297.7
(22) Anmeldetag: 19.01.2012
(51) Int. Cl.: A63H 17/06, B62K 9/00

(54) **Spielzeug-Anhänger**
Toy trailer
Remorque de jeu

(30) Priorität: 29.01.2011 DE 102011009708
(43) Veröffentlichungstag der Anmeldung: 01.08.2012
(73) Patentinhaber: Franz Schneider GmbH & Co. KG, 96465 Neustadt b. Coburg (DE)
(72) Erfinder: Luther, Rainer, 96465 Neustadt (DE); Schneider, Frank, 96465 Neustadt (DE)
(74) Vertreter: Flosdorff, Jürgen

(56) Entgegenhaltungen:
- EP-A1- 2 213 347
- WO-A1-92/10256
- CN-Y- 201 267 717
- DE-A1- 3 344 578
- US-A- 5 383 808

## Beschreibung

Die Erfindung betrifft einen Spielzeug-Anhänger mit einem Chassis und einer darauf angeordneten Lademulde. Der Spielzeug-Anhänger ist z.B. mit einem pedalgetriebenen Kinderfahrzeug in Form eines Traktors koppelbar. Die Spielperson kann damit den Spielzeug-Anhänger beispielsweise an einen Ort fahren, an dem sie die Lademulde mit Sand oder dergleichen belädt, um die Ladung an einen anderen Ort zu transportieren und dort abzuladen.

Die EP 2 21 3 347 A1 offenbart einen Anhänger für ein Kinderfahrzeug mit einem Chassis und einer darauf angeordneten Lademulde, die um eine quer zur Längsachse des Chassis und parallel zu dieser Längsachse verlaufende Achse kippbar ist. Eine vollständige Trennung der Lademulde von dem Chassis ist nicht vorgesehen.

Der vorliegenden Erfindung liegt die Aufgabe zugrunde, einen Spielzeug-Anhänger so zu gestalten, dass er für die spielenden Person einen hohen Gebrauchs- oder Spielwert besitzt.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Lademulde des Spielzeug-Anhängers wahlweise von dem Chassis absetzbar oder quer zur Längsachse des Chassis kippbar ist, wobei an der Unterseite des rückwärtigen Endes der Lademulde ein Achsglied befestigt ist, das in einer ersten Drehlage in einem Lagerblock des Chassis gehalten und in einer zweiten Drehlage zum rückwärtigen Austritt aus dem Lagerblock frei gegeben ist.

Damit kann das spielende Kind die Lademulde an einem Ort absetzen, die Mulde z.B. mit Sand beladen und anschließend wieder auf das Chassis aufnehmen und zu einem anderen Ort fahren, wo es die Lademulde um eine am rückwärtigen Ende des Chassis befindliche Kippachse, die quer zur Längsachse des Chassis und der Mulde verläuft, so verschwenkt, dass die Ladung aus der rückwärtigen Öffnung der Mulde heraus abgekippt wird. Hierzu kann die Lademulde mit einer hinteren schwenkbaren Klappe oder vorzugsweise mit zwei an den Längsseiten der Lademulde angeordneten, um vertikale Achsen schwenkbaren Klappen versehen sein.

Der erfindungsgemäße Spielzeug-Anhänger hat vielfältige Einsatzmöglichkeiten und damit verbunden einen hohen Unterhaltungs- und Spielwert für das Kind.

In vorteilhafter Ausgestaltung der Erfindung führt die Spielperson den Kippvorgang und das Absetzen der Lademulde mit Hilfe eines Hakenarms durch, der schwenkbar an dem Chassis befestigt ist. Der mit einem Haken versehene Arm hat dabei einen teleskopartig verlängerbaren langen Armabschnitt, der sich in der Ausgangslage in axialer Richtung des Chassis erstreckt und an dem Chassis im Abstand von dessen hinteren Ende angelenkt ist, sowie einen abgewinkelten kurzen Abschnitt, der in der auf dem Chassis aufliegenden Ausgangslage die vordere Stirnfläche der Lademulde mittig umgreift und lösbar an der vorderen Stirnseite der Lademulde befestigt ist. Hierzu untergreift der Haken in einer vorteilhaften Ausgestaltung der Erfindung einen von der vorderen Stirnwand der Lademulde beabstandeten Querbolzen. Der Haken hat bevorzugt querschnittlich in etwa einen Halbkreisform, deren Öffnung in der Ausgangslage des Hakenarms von der zugehörigen Stirnseite der Mulde weg weist, d.h. nach vorne zu dem Zugfahrzeug gerichtet ist.

In diesem Zusammenhang sei erklärt, dass mit "rückwärtig" oder "hinten" die von dem Zugtraktor abgewandte Seite des Anhängers gemeint ist.

Der Hakenarm ist in einer mittigen, in axialer Richtung des Chassis verlaufenden Aussparung oder Vertiefung befestigt und ist in dieser Aussparung/Vertiefung versenkt, wenn die Lademulde auf dem Chassis aufliegt. Der im rechten Winkel nach oben verlaufende kurze Armabschnitt verläuft im wesentlichen parallel zur vorderen Stirnwand der Lademulde und hintergreift den Querbolzen oder dergleichen Befestigungsmittel.

Nahe dem Haken ist an dem kurzen Armabschnitt ein nach vorne weisender Handgriff angebracht oder angeformt, mit dem die Spielperson den Hakenarm und damit die Lademulde anheben kann. Dabei verlängert sich der lange Armabschnitt teleskopartig, da der Anlenkpunkt des Hakenarms vor der Kippachse der Lademulde liegt, vorzugsweise etwa auf halber axialer Länge der Lademulde. Der Hakenarm ist vorzugsweise mittels eines Bolzens in der Vertiefung/Aussparung des Chassis angelenkt.

Mit Hilfe des Hakenarms kann die Lademulde nicht nur um ihre hintere Kippachse geschwenkt, sondern auch von dem Chassis abgesetzt werden, wie weiter oben erwähnt ist. Hierzu ist an der Unterseite des rückwärtigen Endes der Lademulde ein besonderes Achsglied befestigt, das in einer Drehlage bezüglich der Lademulde in einem Lagerblock des Chassis gehalten bzw. blockiert ist und in einer zweiten Drehlage zum rückwärtigen Austritt aus dem Lagerblock frei gegeben ist. Dieses Achsglied ist in etwa gabelförmig oder Schlüsselloch-ähnlich geschlitzte Vorsprünge an der Unterseite der Lademulde an deren hinterem Ende eingeschnappt, und zwar so, dass das Achsglied drehbar in dem Schnappsitz bleibt, jedoch nicht nach unten aus der Befestigungslage heraus fallen kann. Das Achsglied hat vorzugsweise mehrere nebeneinander liegende kreisförmige Ansätze, von denen ein übereinstimmendes Kreissegment weg geschnitten ist. Diese bevorzugt scheibenförmigen Ansätze sind drehfest mit der eigentlichen Achse des Achsglieds verbunden.

An dem hinteren Ende des Chassis ist ein Lagerblock befestigt, vorzugsweise aufgesteckt und angeschraubt, der einen quer verlaufenden Aufnahmeraum für den mittigen Bereich des Achsglieds hat, an dem sich die scheibenförmigen Ansätze befinden, wobei der Aufnahmeraum eine rückwärtige Austrittsöffnung hat, aus der das Achsglied austreten kann, wenn es sich in der zweiten Drehlage befindet, um die Lademulde von dem Chassis absetzen zu können. Hierzu hat die rückwärtige Austrittsöffnung eine Höhe, die kleiner als der Durchmesser der scheibenförmigen Ansätze und größer als die Höhe der Ansätze an den weg geschnittenen Kreissegmenten ist. Vorzugsweise befinden sich in der den Aufnahmeraum oben begrenzenden Wand des Lagerblocks Schlitze zur Aufnahme der scheibenförmigen Ansätze, wodurch die Position des Achsglieds bezüglich des Lagerblocks definiert ist. Die Schlitze sind geringfügig breiter als die Dicke der scheibenförmigen Ansätze.

Grundsätzlich kann an Stelle von mehreren nebeneinander liegenden scheibenförmigen Ansätzen auch ein einziger breiter Ansatz vorgesehen sein.

Das Achsglied hat vorzugsweise an beiden seitlichen Enden Handgriffe, die drehfest mit dem Achsglied verbunden sind. Mit diesen Handgriffen sind die beiden Drehlagen des Achsglieds einstellbar, wobei diese beiden Drehlagen durch kreisbogenförmige Vorsprünge oder Erhebungen an zugehörigen Wandabschnitten der Lademulde definiert sind, über die die Handgriffe in einem leichten Klemmsitz gleiten, wenn die Drehlage des Achsglieds verstellt werden soll. Hinter den Enden der kreisbogenförmigen Erhebungen rasten die Handgriffe ein und sind durch Anschläge an den zugeordneten Wandabschnitten der Mulde gegen weitere Drehung arretiert.

An den beiden seitlichen Endbereichen des Achsglieds sind vorteilhafterweise freilaufende Rollen angeordnet, auf denen die Lademulde abrollt, wenn sich das Achsglied in der Freigabestellung befindet und die Lademulde mittels des Hakenarms nach hinten verschwenkt und dabei von dem Chassis herab geglitten ist.

Dabei ist mit Vorteil vorgesehen, dass an der Unterseite der Lademulde zwei in axialer Richtung verlaufende Rippen angebracht sind, die zur Führung der Lademulde an den Seitenrändern des Chassis dienen. Damit ist gewährleistet, dass beim Aufnehmen der Lademulde durch Rückschwenken des Hakenarms die Lademulde wieder in ihrer exakten Ausrichtung auf das Chassis aufgenommen werden kann, wobei das Achsglied wieder in die Aufnahmeöffnung des Lagerblocks eintritt, exakt zentriert durch die scheibenförmigen Ansätze des Achsglieds und die zugehörigen Schlitze am Rand der Austrittsöffnung des Lagerblocks. In dieser Position wird die Lademulde auf dem Chassis verriegelt, in dem das Achsglied in die erste Drehlage versetzt wird.

Weitere Einzelheiten der Erfindung ergeben sich aus der nachfolgenden Beschreibung einer bevorzugten Ausführungsform sowie anhand der Zeichnungen. Dabei zeigen:
- Figuren 1 und 2: Explosionsdarstellungen des Anhängers in unterschiedlichen Perspektiven;
- Figur 3: den rückwärtigen Endabschnitt des Anhängers in einer vergrößerten Darstellung;
- Figur 4: einen Vertikalschnitt durch den Bereich der Figur 3;
- Figuren 5A bis 5C: aufeinanderfolgende Zustände des Anhängers beim Kippen der Lademulde;
- Figuren 6A bis 6F: aufeinanderfolgende Zustände beim Absetzen der Lademulde;
- Figuren 7A bis 7F: eine bevorzugte Ausführungsform einer Selbstverriegelung des Hakenarms mit der Lademulde in verschiedenen Darstellungen zur Veranschaulichung des Funktionsprinzips.

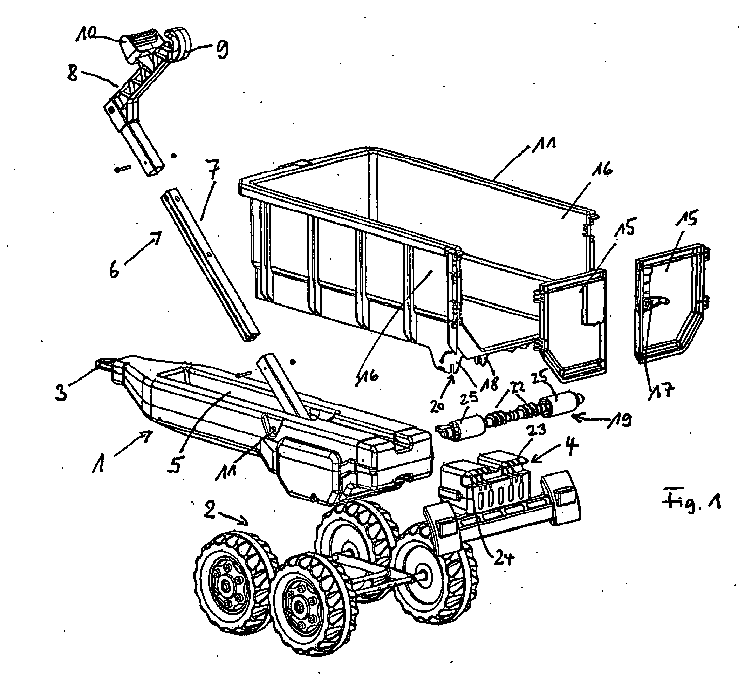

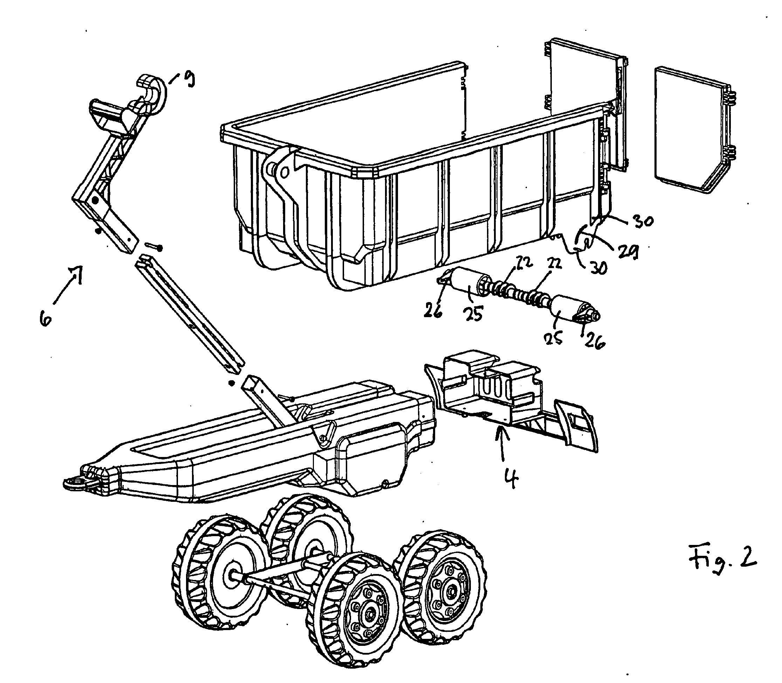

Es wird zunächst auf die Figuren 1 und 2 Bezug genommen. Der Anhänger enthält ein Chassis 1, das mit vier Rädern 2 versehen ist. Das Chassis 1 ist an seinem vorderen Ende mit einem Kupplungsteil 3 versehen, mit dem das Chassis 1 beispielsweise an einem pedalgetriebenen Spielzeugtraktor befestigbar ist. Auf das hintere Ende des Chassis 1 ist ein Lagerblock 4 aufgesteckt und mittels Schrauben befestigt. Das Chassis 1 und der Lagerblock 4 bestehen aus Kunststoff.

Das Chassis 1 hat eine mittig in axialer Richtung verlaufende Aussparung oder Vertiefung 5, in der etwa auf halber Länge der axialen Erstreckung des Anhängers ein insgesamt mit dem Bezugszeichen 6 bezeichneter Hakenarm angelenkt ist. Der Hakenarm enthält einen aus drei Stücken zusammen gesetzten langen Armabschnitt 7, der beim Verschwenken des Hakenarms 6 teleskopartig verlängert oder verkürzt wird, und einen im rechten Winkel angesetzten kurzen Armabschnitt 8, der an seinem freien Ende mit einem Haken 9 versehen ist. Der Haken 9 hat in der Seitenansicht im wesentlichen eine Halbkreisform mit einer nach vorne, d.h. zu dem Zugfahrzeug gerichteten Öffnung. Im Abstand von dem Haken 9 ist der kurze Armabschnitt 8 mit einem Handgriff 10 versehen.

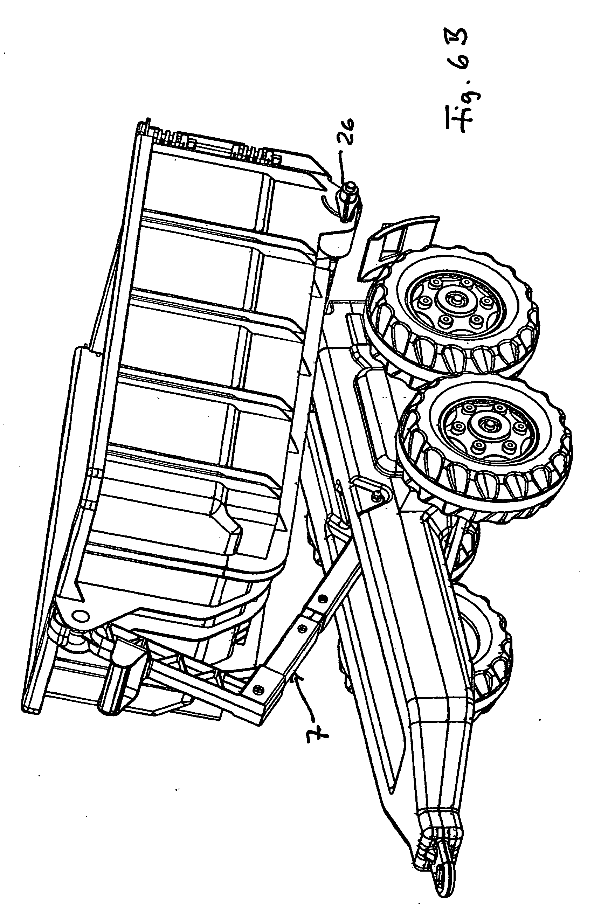

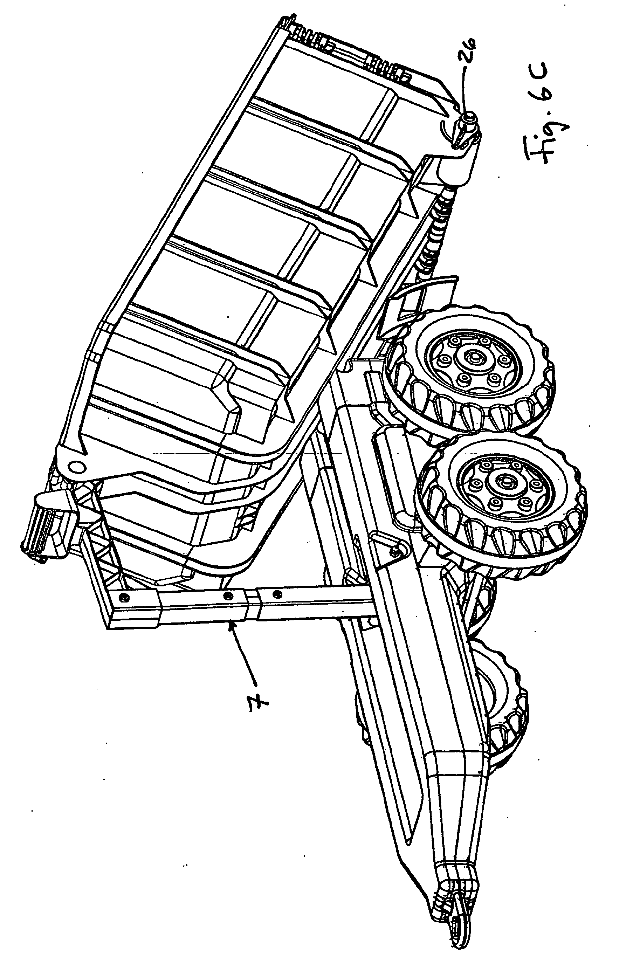

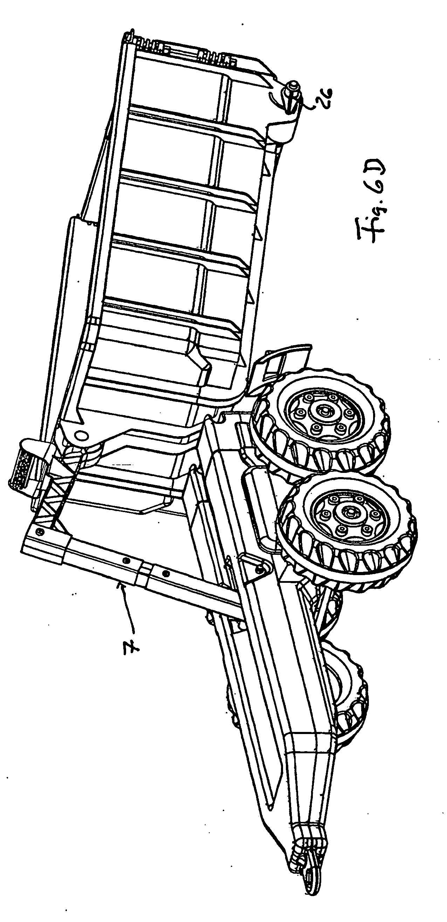

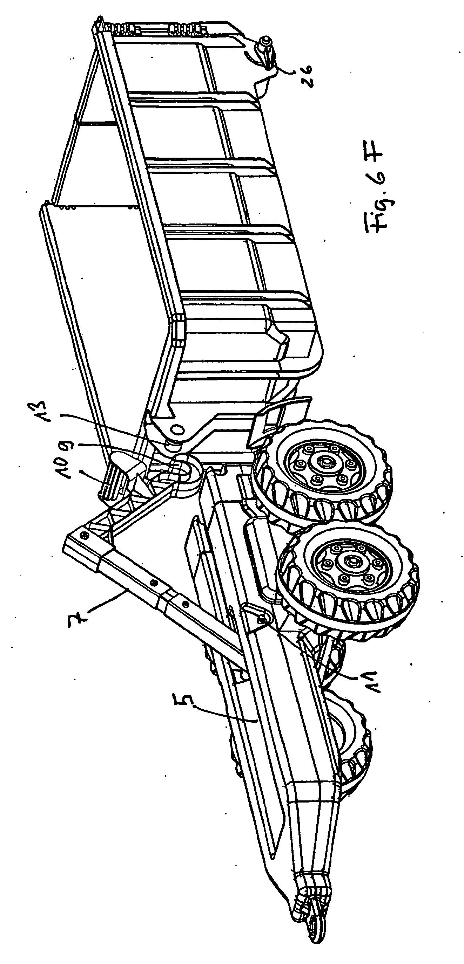

Der teleskopartig verlängerbare Armabschnitt 7 ist innerhalb der Vertiefung bzw. Aussparung 5 mittels eines Bolzens 11 derart schwenkbar gelagert, dass er aus einer in der Vertiefung oder Aussparung versenkten, nach vorne gerichteten Lage in eine schräg nach hinten gerichtete Lage verschwenkbar ist, die beispielsweise in Figur 6F dargestellt ist.

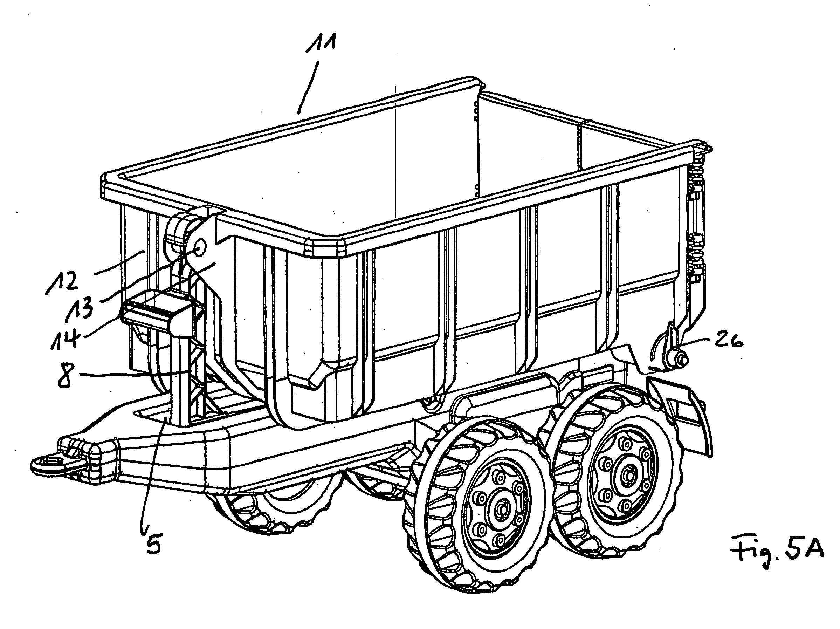

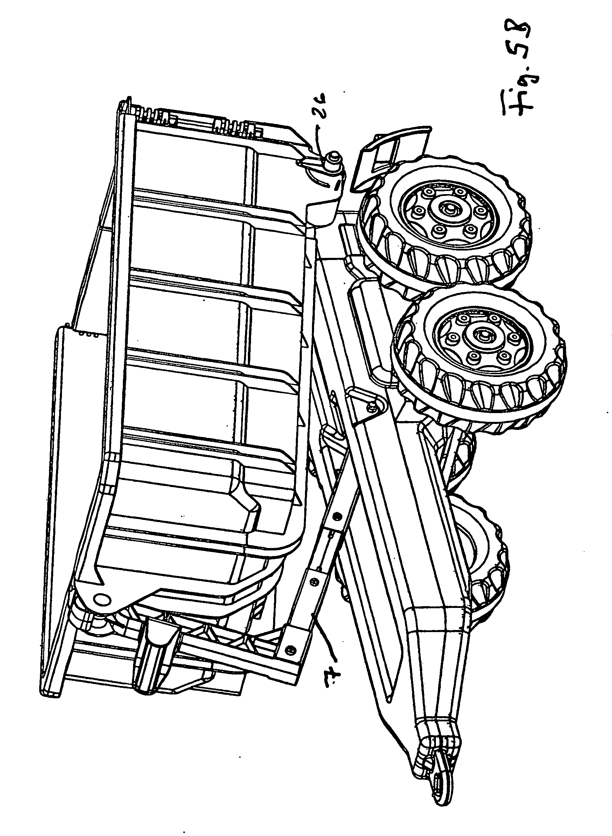

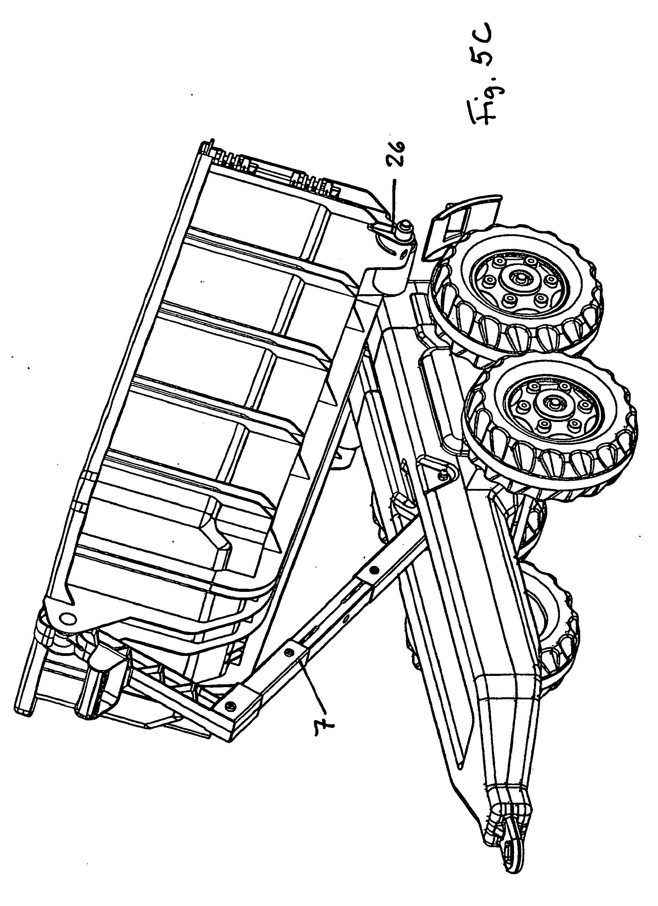

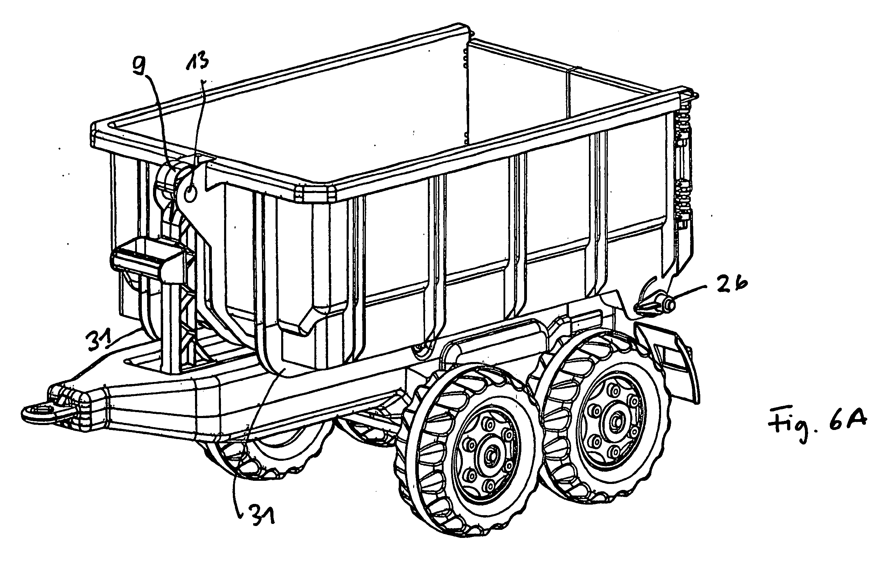

Auf dem Chassis 1 liegt in der in den Figuren 5A und 6A dargestellten Ausgangslage eine Lademulde 11 auf dem Chassis 1 auf, wobei der lange Armabschnitt 7 in der mittigen Vertiefung bzw. Aussparung 5 versenkt ist und der kurze Armabschnitt 8 die vordere Stirnwand 12 der Lademulde 11 umgreift. In dieser Lage hintergreift der Haken 9 einen von der Stirnwand 12 beabstandeten Bolzen 13, der von vorstehenden Verstärkungsrippen 14 der Lademulde 11 gehalten ist. Die Ladenmulde besteht vorzugsweise aus Kunststoff.

Die rückwärtige Stirnwand der Lademulde 11 ist durch zwei Klappen 15 gebildet, die an den beiden Seitenwänden 16 der Lademulde 11 angelenkt sind und über einen Handgriff 17 verriegelbar sind.

Von dem rückwärtigen Ende der Lademulde 11 stehen an der Unterseite ihres Bodens Vorsprünge 18 nach unten vor, die vom unteren Rand ausgehend schlitzförmige Öffnungen haben, in die ein Achsglied 19 eingerastet ist. Hierzu wird das Achsglied 19 an den zugehörigen Stellen durch Verengungen der Schlitze 20 hindurch gedrückt. In der Endlage ist das Achsglied 19 drehbar in den Ansätzen 18 gehalten, kann aber nicht aus diesen nach unten heraus fallen.

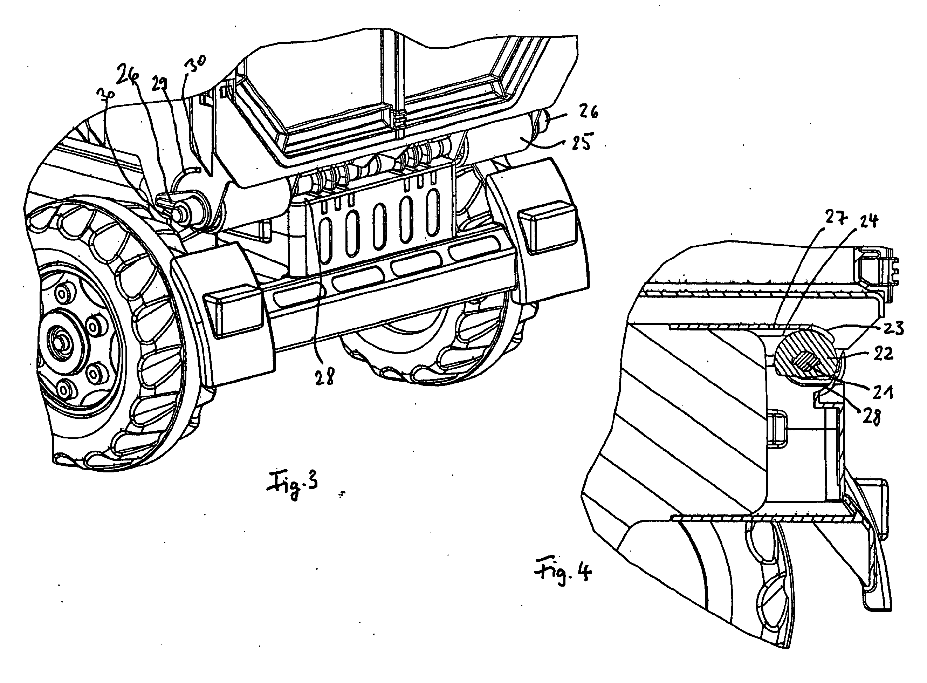

Auf der eigentlichen Achse 21 des Achsglieds 19 sitzen scheibenförmige Elemente 22, die drehfest mit der Achse 21 verbunden sind, wie Figur 4 zeigt. Dabei sind jeweils drei derartige Elemente 22 auf der Achse vorgesehen, deren Positionen mit denjenigen von Schlitzen 23 in dem Lagerblock 4 übereinstimmen, wenn das Achsglied 19 an dem Lagerblock 4 befestigt ist.

Die scheibenförmigen Elemente 22 haben eine Kreisform mit einem weg geschnitten Kreissegment. Der Lagerblock 4 hat eine Aufnahmeöffnung 24, in die der mittlere Bereich des Achsglieds 19 mit den scheibenförmigen Elementen 22 aufnehmbar ist.

Rechts und links von den scheibenförmigen Elementen 22 sitzt jeweils eine Rolle 25 frei drehbar auf der Achse 21, die an beiden seitlichen Enden zudem drehfest mit einem Handgriff 26 verbunden ist.

Mit Hilfe der Handgriffe 26 ist das Achsglied 19 an dem Chassis 1 bzw. in der Aufnahmeöffnung 24 zwischen der z.B. in Figur 5A gezeigten Lage, in der das Achsglied 19 in der Aufnahmeöffnung 24 blockiert bzw. gehalten ist, und der in Figur 6A gezeigten Lage drehbar bzw. einstellbar, in der das Achsglied 19 aus der Aufnahmeöffnung 24 austreten kann, wodurch die Lademulde 11 von dem Chassis getrennt werden kann.

Die Freigabestellung des Achsglieds 19 ist am besten aus den Figuren 3 und 4 ersichtlich. Die obere Wand 27, die die Aufnahmeöffnung 24 begrenzt, enthält bis zum Rand durchgehende Schlitze 23. Die Aufnahmeöffnung 24 ist unten von einer durchgehenden Wand 28 begrenzt, die keine derartigen Schlitze enthält. Wenn das Achsglied 19 mit Hilfe der Handgriffe 26 in die in den Figuren 3 und 4 dargestellte Freigabelage gedreht ist, können die scheibenförmigen Ansätze 22 über den Rand des Wandabschnitts 28 und durch die Schlitze 23 der oberen Wand 27 hindurch aus der Aufnahmeöffnung 24 austreten.

Wenn die Handgriffe 26 jedoch um etwa 90° nach oben verschwenkt sind, blockiert der Wandabschnitt 28 der Aufnahmeöffnung 24 den Austritt des Achsglieds 19.

Beim Verstellen der Handgriffe 26 von der einen in die andere Lage gleiten die Handgriffe 26 jeweils über kreisbogenförmige Vorsprünge 29, die sich über einen Bogen von etwa 90° erstrecken, hinweg und rasten dahinter ein. Anschläge 30 verhindern ein weitergehendes Drehen der Handgriffe 26.

Die Lademulde 11 wird von der Spielperson mit Hilfe des Hakenarms 6 entweder um die rückwärtige Achse 19 bzw. 21 gekippt oder hinter dem Chassis 1 abgesetzt. Hierzu ergreift die Spielperson den Handgriff 10 und schwenkt die Lademulde 11 um die rückwärtige Achse 19 bzw. 21, wenn das Achsglied 19 in die Verriegelungslage gedreht ist, die in den Figuren 5A bis 5C dargestellt ist. Bei geöffneten Ladeklappen 15 kann auf diese Weise beispielsweise eine Sandladung abgekippt werden. Danach kann die Lademulde 11 wieder in die in Figur 5A dargestellte Ausgangslage zurück geschwenkt werden.

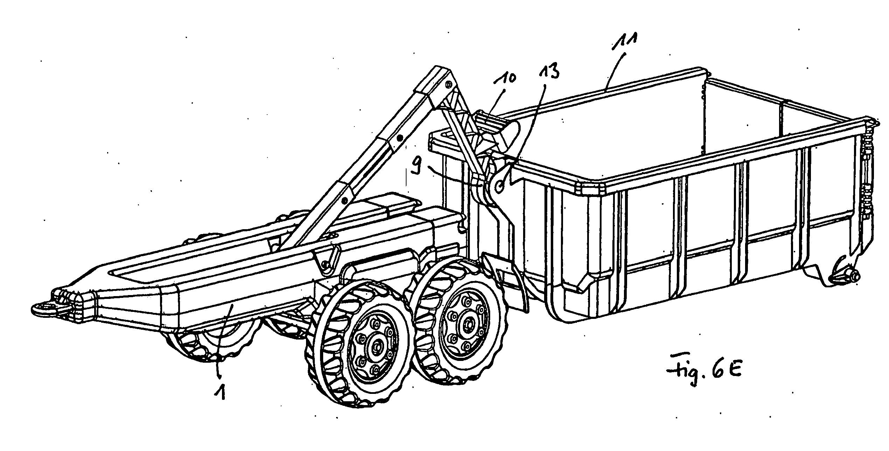

Wenn das Achsglied 19 in die in den Figuren 6A bis 6F dargestellte Stellung gedreht ist, in der die Lademulde 11 von dem Chassis 1 getrennt werden kann, gleitet die Lademulde 11 über den Lagerblock 4 des Chassis 1 hinweg zur rückwärtigen Seite des Chassis, wobei die Lademulde 11 von zwei in axialer Richtung verlaufenden Rippen 31 an ihrer Unterseite entlang der Seitenränder des Chassis geführt wird. Wenn die Lademulde gemäß Figur 6E auf dem Boden hinter dem Chassis abgesetzt ist, trennt sich der Haken 9 von dem Bolzen 13 an der vorderen Stirnwand der Lademulde 11, wenn der Hakenarm 6 mittels des Griffstücks 10 ein wenig weiter nieder gedrückt wird, so dass die Lademulde 11 vollständig von dem Chassis 1 getrennt ist, wie Figur 6F zeigt.

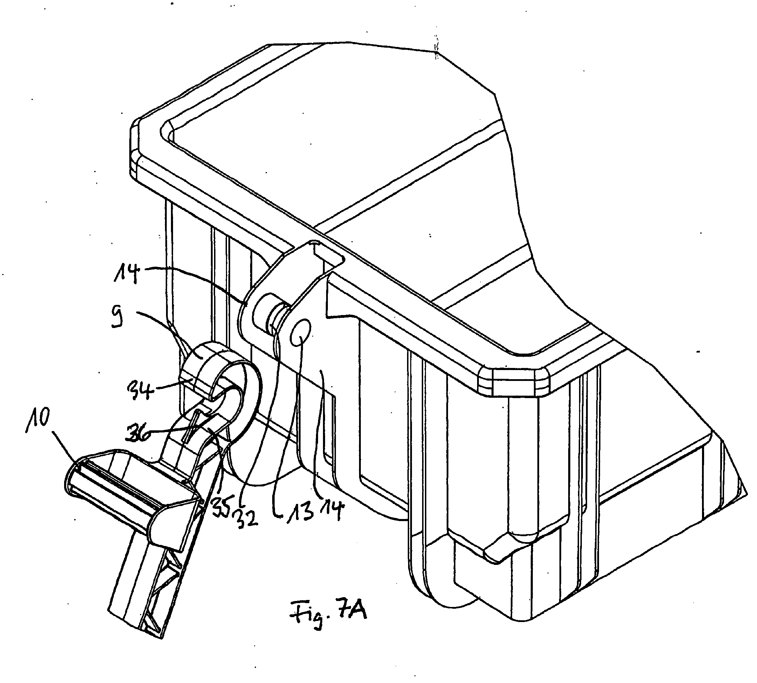

Die Figuren 7A bis 7F zeigen in perspektivischen Ansichten, teilweise geschnitten, einen bevorzugten Verriegelungsmechanismus zwischen dem Haken 9 und dem Bolzen 13, der zusammen mit den ihn haltenden Wandabschnitten 14 sozusagen eine "Öse" bildet.

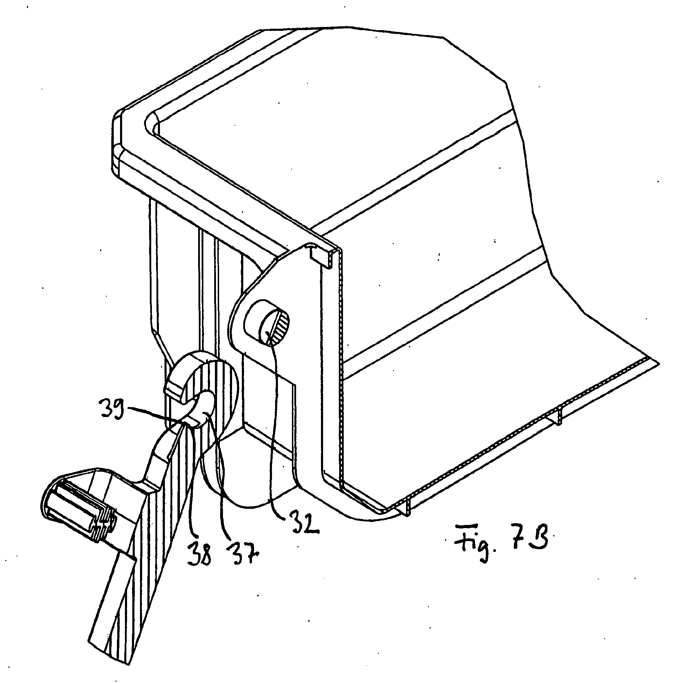

Die Figuren 7A und 7B zeigen den Haken 9 und die "Öse" 13, 14 in getrennter Anordnung. Der Bolzen 13 enthält mittig eine Nut 32, in deren Bereich etwa die Hälfte des Querschnitts des Bolzens 13 weg geschnitten ist, wobei der Nutboden von oben nach unten gesehen, schräg nach vorne verläuft. Weg geschnitten ist im Bereich der Nut die vordere Hälfte 33 des Bolzenquerschnitts. Der Bolzen ist drehfest von den Wandabschnitten 14 gehalten.

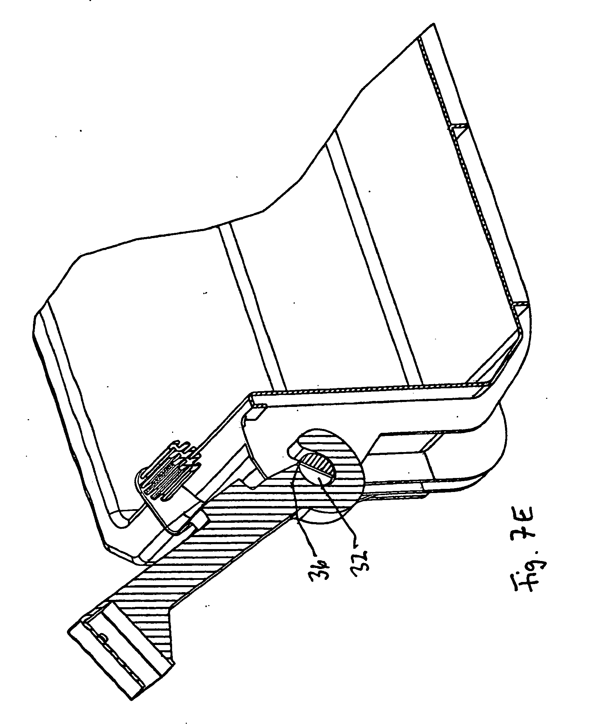

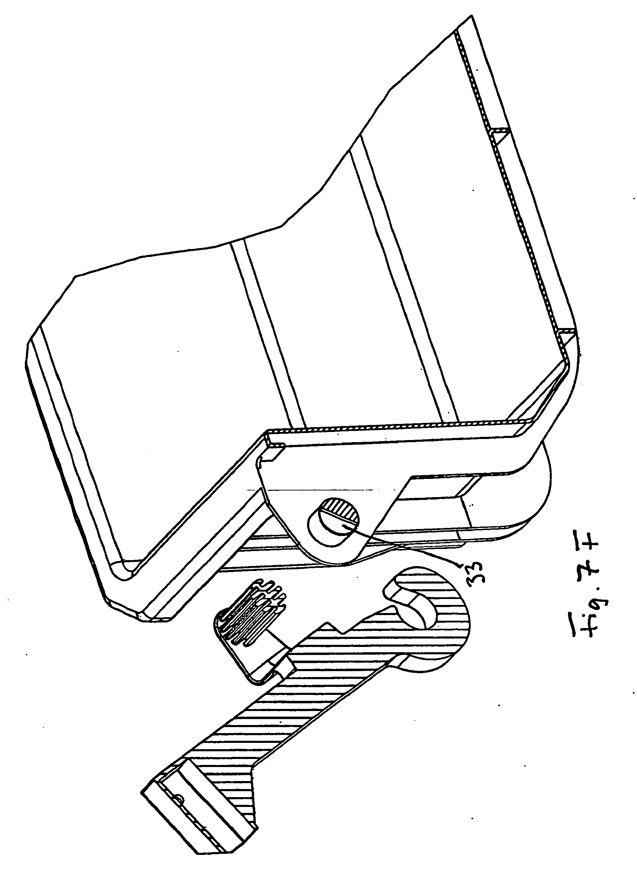

Der Haken 9 hat eine Breite, die geringfügig kleiner ist als der lichte Abstand zwischen den Seitenwänden 14, so dass der Haken 9 zum Eingriff hinter den Bolzen 13 zwischen den Wandabschnitten 14 hindurch treten kann. Dies ist allerdings nur in der in den Figuren 7E und 7F dargestellten Lage des Hakens 9 möglich.

Der Haken 9 hat in etwa eine U-Form, deren Aufnahmeöffnung für den Bolzen 13 kreisförmig gerundet ist, wobei der Abstand zwischen seiner freien Randkante 34 und dem gegenüber liegenden, flach gewölbt auslaufenden Hakenabschnitt 35 etwas größer ist als die Dicke des Vollquerschnitts des Bolzens 13. Von dem Hakenabschnitt 35 steht mittig ein schmaler Vorsprung 36 vor, der dem Innenraum 37 des Hakens 9 zugewandt eine bogenförmigen Randkontur 38 hat. Die Breite des leistenförmigen Vorsprungs 36 ist etwas kleiner als die Breite der Nut 32, so dass der Vorsprung 36 bei entsprechender Lage des Hakens 9 in die Nut 32 eintreten kann.

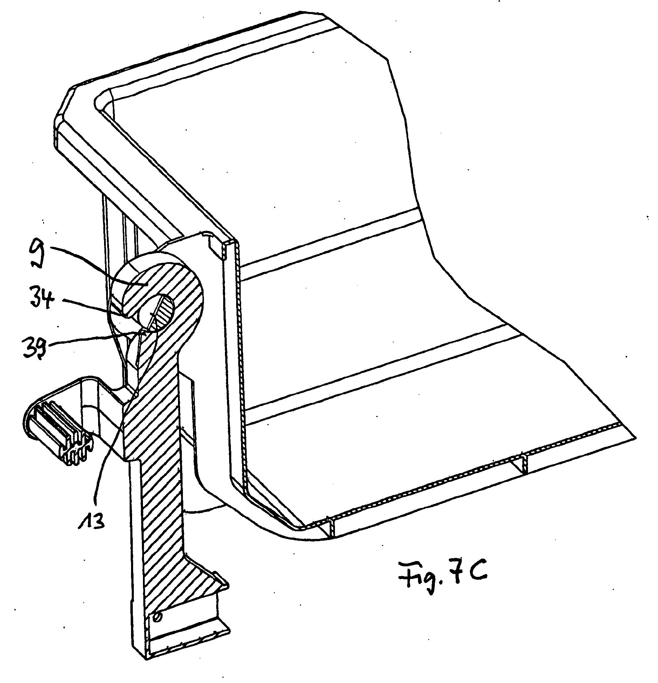

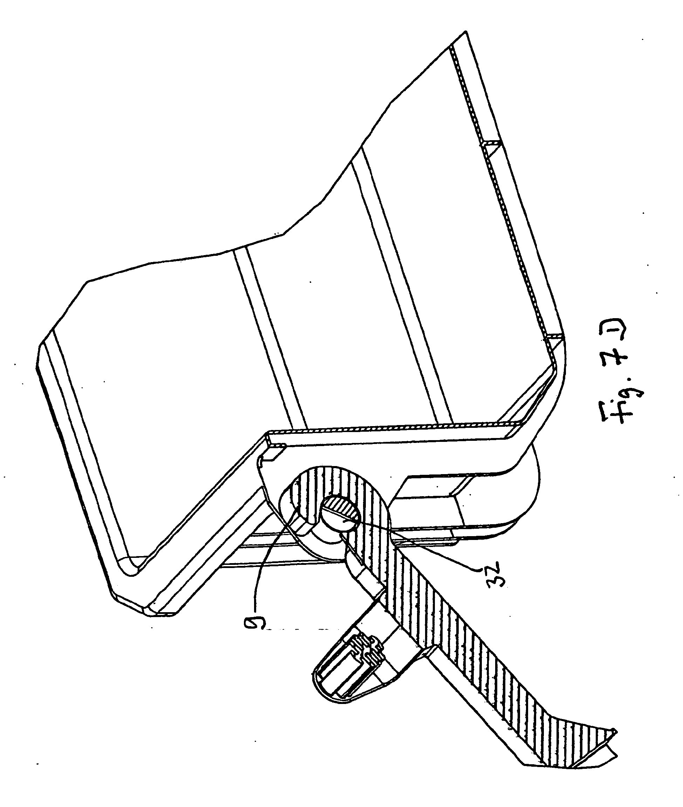

Der freie Abstand zwischen dem Kopfende 39 des Vorsprungs 36 und der gegenüber liegenden Randkante 34 des Hakens 9 ist kleiner als der Durchmesser des Bolzens 13 und etwas größer als die verbleibende Breite des Bolzens 13 im Bereich der Nut 32. Dies hat zur Folge, dass der Haken 9 in der in Figur 7C dargestellten Ausgangslage des Hakenarms und auch während des Verschwenkens in die in Figur 7D dargestellte Lage nicht von der Öse trennbar ist. Wenn der Hakenarm weiter in die Absetzposition der Mulde 11 verschwenkt worden ist (Figur 7E) kann er so zurück bewegt werden, dass der Vorsprung 36 des Hakens 9 durch die Nut 32 gleitet, wobei - relativ gesehen - der Bolzen 13 aus dem Aufnahmeraum des Hakens 9 austritt. Dieser Zustand ist in Figur 7F gezeigt.

Es wird betont, dass die Erfindung nicht auf die beschriebene und dargestellte Ausführungsform beschränkt ist. Es sind alle offenbarten Merkmale der Ausführungsform auch einzeln untereinander anders als oben beschrieben und/oder in den Ansprüchen zusammengefasst miteinander kombinierbar.

## Patentansprüche

1. Spielzeug-Anhänger mit einem Chassis und einer darauf angeordneten Lademulde (11), die sowohl von dem Chassis (1) absetzbar als auch um eine quer zur Längsachse des Chassis (1) verlaufende Achse (19) kippbar ist,
**dadurch gekennzeichnet,**
**dass** an der Unterseite des rückwärtigen Endes der Lademulde (11) ein Achsglied (19) befestigt ist, das in einer ersten Drehlage in einem Lagerblock (4) des Chassis (1) gehalten und in einer zweiten Drehlage zum rückwärtigen Austritt aus dem Lagerblock (4) freigegeben ist.

2. Spielzeug-Anhänger nach Anspruch 1,
**dadurch gekennzeichnet,**
**dass** das Achsglied (19) wenigstens einen, vorzugsweise mehrere kreisförmige Ansätze (22) aufweist, von denen ein übereinstimmendes Kreissegment weggeschnitten ist, und dass der Lagerblock (4) einen Aufnahmeraum (24) für einen die Ansätze (22) enthaltenden mittigen Bereich des Achsglieds (19) aufweist mit einer rückwärtigen Austrittsöffnung, deren Höhe kleiner als der Durchmesser der Ansätze (22) und größer als die Höhe der Ansätze (22) an den weggeschnittenen Kreissegmenten ist.

3. Spielzeug-Anhänger nach einem der Ansprüche 1 oder 2,
**dadurch gekennzeichnet,**
**dass** an den seitlichen Enden des Achsglieds (19) Handgriffe (26) angebracht sind, mit denen die beiden Drehlagen des Achsglieds (19) einstellbar sind, und dass die beiden Drehlagen durch kreisbogenförmige Vorsprünge (29) an Wandabschnitten der Lademulde (11) definiert sind, über die die Handgriffe (26) in einem leichten Klemmsitz gleiten und hinter deren Enden die Handgriffe einrasten.

4. Spielzeug-Anhänger nach einem der Ansprüche 1 bis 3,
**dadurch gekennzeichnet,**
**dass** auf dem Achsglied (19) freilaufende Rollen (25) angeordnet sind.

5. Spielzeug-Anhänger nach einem der Ansprüche 1 bis 4,
**dadurch gekennzeichnet,**
**dass** an dem Chassis (1) ein mit einem Haken (9) versehener Arm (6) befestigt ist, der einen teleskopartig verlängerbaren langen Armabschnitt (7), der an dem Chassis (1) im Abstand von dem hinteren Ende angelenkt ist, und einen abgewinkelten kurzen Armabschnitt (8) hat, an dessen freien Ende der Haken (9) angebracht ist, der einen Querbolzen (13) oder dergleichen an der vorderen Stirnseite (12) der Lademulde (11) untergreifen kann.

6. Spielzeug-Anhänger nach Anspruch 5,
**dadurch gekennzeichnet,**
**dass** der Arm (6) in einer mittigen Aussparung oder Vertiefung (5) des Chassis (1) angelenkt ist und dass sein langer Armabschnitt (7) in der Aussparung bzw. Vertiefung (5) versenkt ist, wenn die Lademulde (11) auf dem Chassis (1) aufliegt.

7. Spielzeug-Anhänger nach einem der Ansprüche 5 oder 6,
**dadurch gekennzeichnet,**
**dass** an dem Arm (6) nahe bei dem Haken (9) ein Handgriff (10) angebracht ist.

8. Spielzeug-Anhänger nach einem der Ansprüche 1 bis 7,
**dadurch gekennzeichnet,**
**dass** an der Unterseite der Lademulde (11) zwei in axialer Richtung verlaufende Rippen (31) angebracht sind, die zur Führung der Lademulde (11) an den Seitenrändern des Chassis (1) dienen.

9. Spielzeug-Anhänger nach einem der Ansprüche 1 bis 8,
**dadurch gekennzeichnet,**
**dass** an der Rückseite der Lademulde (11) wenigstens eine, vorzugsweise zwei schwenkbare Klappen (15) angeordnet sind.

10. Spielzeuganhänger nach einem der Ansprüche 5 bis 9,
**dadurch gekennzeichnet,**
**dass** der Haken (9) einen in dessen Hohlraum ragenden Versprung (36) aufweist, der so mit einer mittigen Nut (32) des Bolzens (13) zusammenwirkt, dass der Haken (9) nur in der Absetzlage des Hakenarms von der Mulde (11) trennbar ist.

## Claims

1. A toy trailer with a chassis and a load box (11) arranged thereon, which may both be deposited from the chassis (1) and is also tiltable about a shaft (19) extending transversely along the longitudinal axis of the chassis (1), **characterised in that** secured to the underside of the rear end of the load box (11) there is a shaft element (19), which, in a first rotary position, is retained in a bearing block (4) on the chassis (1) and, in a second rotary position, is free to move rearwardly out of the bearing block (4).

2. A toy trailer as claimed in claim 1, **characterised in that** the shaft element (19) has at least one and preferably a plurality of circular formations (22), from which a corresponding segment of the circle is cut away, and that the bearing block (4) has a receiving space (24) for a central region, which includes the formations (22), of the shaft element (19) with a rear exit opening, whose height is smaller than the diameter of the formations (22) and larger than the height of the formations (22) at the cut away segments of the circle.

3. A toy trailer as claimed in one of claims 1 or 2, **characterised in that** attached to the lateral ends of the shaft element (19) there are handles (26), with which the two rotary positions of the shaft element (19) may be set and that the two rotary positions are defined by circular arcuate shaped projections (29) on wall sections of the load box (11), over which the handles (26) slide as a gentle force fit and behind whose ends the handles latch.

4. A toy trailer as claimed in one of claims 1 to 3, **characterised in that** free-wheeling rollers (25) are arranged on the shaft element (19).

5. A toy trailer as claimed in one of claims 1 to 4, **characterised in that** fastened to the chassis (1) there is an arm (6), which is provided with a hook (9) and has a telescopically extendable long arm section (7), which is pivotally connected to the chassis (1) at a distance from the rear end, and an angled short arm section (8), attached to whose free end is the hook (9), which can engage beneath a transverse pin (13) or the like at the front end surface (12) of the load box (11).

6. A toy trailer as claimed in claim 5, **characterised in that** the arm (6) is pivotally connected in a central opening or recess (5) in the chassis (1) and that its long arm section (7) is recessed into the opening or recess (5) when the load box (11) rests on the chassis (1).

7. A toy trailer as claimed in one claims 5 or 6, **characterised in that** attached to the arm (6) near to the hook (9) there is a hand grip (10).

8. A toy trailer as claimed in one claims 1 to 7, **characterised in that** attached to the underside of the load box (11) are two ribs (31), which extend in the axial direction and serve to guide the load box (11) on the side edges of the chassis (1).

9. A toy trailer as claimed in one of claims 1 to 8, **characterised in that** arranged on the rear side of the load box (11) there are at least one and preferably two pivotable flaps (15).

10. A toy trailer as claimed in one of claims 5 to 9, **characterised in that** the hook has a projection (36), which extends into its opening and cooperates with a central groove (32) in the pin (13) so that the hook (9) is separable from the box (11) only in the depositing position of the hook arm.

## Revendications

1. Remorque de jeu avec un châssis et une cavité de chargement (11) disposée dessus qui non seulement peut être retirée du châssis (1) mais peut aussi être basculée d'un essieu (19) s'étendant transversalement à l'axe longitudinal du châssis (1),
**caractérisé en ce que**
un organe d'essieu (19) est fixé sur le côté inférieur de l'extrémité côté arrière de la cavité de chargement (11), lequel est maintenu dans une première position rotative dans un bloc de palier (4) du châssis (1) et est libéré du bloc de palier (4) dans une seconde position rotative vers la sortie côté arrière.

2. Remorque de jeu selon la revendication 1,
**caractérisée en ce que**
l'organe d'essieu (19) présente au moins une, de préférence plusieurs saillies (22) circulaires, dans lesquelles un segment circulaire coïncident est découpé, et **en ce que** le bloc de palier (4) présente un espace de réception (24) pour une zone médiane contenant les saillies (22) de l'organe d'essieu (19) avec une ouverture de sortie côté arrière, dont la hauteur est inférieure au diamètre des saillies (22) et supérieure à la hauteur des saillies (22) sur les segments circulaires découpés.

3. Remorque de jeu selon l'une quelconque des revendications 1 ou 2,
**caractérisée en ce que**
des poignées (26) sont montées sur les extrémités latérales de l'organe d'essieu (19), avec lesquelles les deux positions rotatives de l'organe d'essieu (19) peuvent être réglées, et **en ce que** les deux positions rotatives sont définies par des saillies (29) en forme d'arc de cercle sur des sections de paroi de la cavité de chargement (11), sur lesquelles les poignées (26) glissent dans un siège de serrage léger et derrière les extrémités desquelles s'encliquètent les poignées.

4. Remorque de jeu selon l'une quelconque des revendications 1 à 3,
**caractérisée en ce que**
des cylindres (26) roulant librement sont disposés sur l'organe d'essieu (19).

5. Remorque de jeu selon l'une quelconque des revendications 1 à 4,
**caractérisée en ce que**
un bras (6) pourvu d'un crochet (9) est fixé sur le châssis (1), lequel présente une longue section de bras (7) allongeable de manière télescopique qui est articulée au châssis (1) à distance de l'extrémité arrière, et une courte section de bras coudée (8), sur l'extrémité libre de laquelle le crochet (9) est monté, lequel peut venir en prise sous un boulon transversal (13) ou similaire sur le côté avant (12) de la cavité de chargement (11).

6. Remorque de jeu selon la revendication 5,
**caractérisée en ce que**
le bras (6) est articulé dans un évidement médian ou cavité (5) du châssis (1) et **en ce que** sa longue section de bras (7) est enfoncée dans l'évidement ou cavité (5), lorsque la cavité de chargement (11) repose sur le châssis (1).

7. Remorque de jeu selon l'une quelconque des revendications 5 ou 6,
**caractérisée en ce que**
une poignée (10) est montée sur le bras (6) près du crochet (9).

8. Remorque de jeu selon l'une quelconque des revendications 1 à 7,
**caractérisée en ce que**
deux nervures (31) s'étendant dans le sens axial sont montées sur le côté inférieur de la cavité de chargement (11), lesquelles servent au guidage de la cavité de chargement (11) sur les bords latéraux du châssis (1).

9. Remorque de jeu selon l'une quelconque des revendications 1 à 8,
**caractérisée en ce que**
au moins un, de préférence deux volets (15) pivotants sont disposés sur le côté arrière de la cavité de chargement (11).

10. Remorque de jeu selon l'une quelconque des revendications 5 à 9,
**caractérisée en ce que**
le crochet (9) présente une saillie (36) pénétrant dans son espace creux qui coagit avec une rainure médiane (32) du boulon (13) de sorte que le crochet (9) ne puisse être séparé de la cavité de chargement (11) que dans la position de retrait du bras de crochet.
